# EUROPEAN PATENT SPECIFICATION

(11) **EP 1 474 760 B1**
(45) Date of publication and mention of the grant of the patent: **07.12.2005**
(21) Application number: 03701639.1
(22) Date of filing: 27.01.2003
(51) Int. Cl.: G06F 17/30

(54) **FAST HASH-BASED MULTIMEDIA OBJECT METADATA RETRIEVAL**
SCHNELLES HASH-BASIERTES METADATENRETRIEVAL FÜR MULTIMEDIAOBJEKTE
RECUPERATION RAPIDE DE METADONNEES D'UN OBJET MULTIMEDIA BASEE SUR LE HACHAGE

(30) Priority: 06.02.2002 EP 02075501
(43) Date of publication of application: 10.11.2004
(73) Proprietor: Koninklijke Philips Electronics N.V., 5621 BA Eindhoven (NL)
(72) Inventor: HAITSMA, Jaap, A., NL-5656 AA Eindhoven (NL)
(74) Representative: Groenendaal, Antonius W. M.
(86) International application number: PCT/IB2003/000260
(87) International publication number: WO 2003/067467

(56) References cited:
- EP-A- 0 955 592
- WO-A-01/62004
- WO-A-01/88900
- US-A- 5 918 223
- ALLAMANCHE, E., HERRE, J. ET AL: "Content-based Identification of Audio Material Using MPEG-7 Low Level Description" PROCEEDINGS SECOND ANNUAL INTERNATIONAL SYMPOSIUM ON MUSIC INFORMATION RETRIEVAL 2001, 15 - 17 October 2001, pages 1-8, XP002198244 Paris, France
- HAITSMA, J., KALKER, T., OOSTVEEN, J.: "Robust Audio Hashing for Content Identification" PROCEEDINGS INTERNATIONAL WORKSHOP ON CONTENT-BASED MULTIMEDIA INDEXING, 19 - 21 September 2001, pages 1-8, XP002198245 Brescia, Italy cited in the application
- HAMPAPUR, A, BOLLE, R.: "Feature Based Indexing for Media Tracking" PROCEEDINGS INTERNATIONAL CONFERENCE ON MULTIMEDIA AND EXPO 2000 (ICME-2000), 30 July 2000 (2000-07-30) - 2 August 2000 (2000-08-02), pages 1709-1712, XP002198246 New York, USA

## Description

The invention relates to a computer-implemented method of obtaining metadata for a multimedia object by matching an object fingerprint for the multimedia object against entries stored in a primary database comprising fingerprints and respective associated sets of metadata.

The invention further relates to a computer system arranged for obtaining metadata for a multimedia object, comprising matching means for matching an object fingerprint for the multimedia object against entries stored in a primary database.

The invention further relates to a computer program product.

Fingerprints of human beings are already used for over a hundred years to identify people. Conceptually a fingerprint can be seen as a short summary, which is unique for every single human being. Recently a growing interest is seen in the field of multimedia processing to compute fingerprints of multimedia objects such as songs, music, pictures or movies. In order to qualify two multimedia objects as the same, instead of comparing the multimedia objects itself, only their fingerprints are compared. A fingerprint of a multimedia object is a representation of the most relevant perceptual features of the object in question. Such fingerprints are sometimes also known as "(robust) hashes".

In most systems using fingerprinting technology, the fingerprints of a large number of multimedia objects along with their associated respective metadata are stored in a database. The term "metadata" refers to information such as the title, artist, genre and so on for a multimedia object. The metadata of a multimedia object is retrieved by computing its fingerprint and performing a lookup or query in the database using the computed fingerprint as a lookup key or query parameter. The lookup then returns the metadata associated with the fingerprint

There are several advantages in storing fingerprints for multimedia objects in a database instead of the multimedia content itself. To name a few:
1. The memory/storage requirements for the database are reduced.
2. The comparison of fingerprints is more efficient than the comparison of the multimedia objects themselves, as fingerprints are substantially shorter than the objects.
3. Searching in a database for a matching fingerprint is more efficient than searching for a complete multimedia object, since it involves matching shorter items.
4. Searching for a matching fingerprint is more likely to be successful, as small changes to a multimedia object (such as encoding in a different format or changing the bit rate) do not affect the fingerprint.

An example of a method of generating a fingerprint for a multimedia object is disclosed in international patent application WO 02/065782 (attorney docket PHNL010110), as well as in Jaap Haitsma, Ton Kalker and Job Oostveen, "Robust Audio Hashing For Content Identification", International Workshop on Content-Based Multimedia Indexing, Brescia, September 2001.

This method can be used to offer a music recognition service. Suppose a person hears a song and wants to know metadata such as title and artist for the song. He takes his mobile phone and establishes a connection with the server. Using this connection the user then uses his phone's microphone to pick up the song so that the server on the other end can hear it. The server then computes a fingerprint for the song, and performs a database lookup to obtain the metadata associated with that fingerprint. The server then sends a message with the metadata to the user's mobile phone, e.g. via SMS.

The metadata can also be e-mailed to an e-mail address for the user, or be sent as a message to the user via an instant messaging service. This way, more extensive information can be supplied than can be handled by the potentially limited capabilities of the mobile phone. The mobile phone could then, for example, receive an SMS message indicating the title and artist, and a statement that more information was sent to the user's e-mail address.

In order to be able to recognize a large number of multimedia objects, the database with fingerprints and metadata must be very large, in the order of hundreds of thousands of entries. This makes managing the database very complex. Often, in such large-scale systems, the fingerprint database has to be distributed over a considerable number of fingerprint server systems to be able to handle all the search requests and to store all the fingerprints. Furthermore, the database has to be kept up-to-date. For example, in the case of audio fingerprinting, the fingerprints of new released songs have to be added. Both the necessary servers and keeping the database up-to-date make the system very costly.

Additionally, because of the large number of entries in the database, query response time may become very long.

WO01/62004 discloses a method and system for identifying media content presented over a media playing device. A sample of the content is compared to a collection of sampled content to identify, it and to ascertain information related to the sample.

The article "Content-based identification of audio material using MPEG-7 low level description" by Allamanche et al., Proceedings second annual international symposium on music information retrieval 2001, discloses the use of fingerprints to identifying unknown audio works in the context of MPEG-7.

The article "Feature-based indexing for media tracking" by Hampapur et al., Proceedings international conference on multimedia and expo 2000, August 2000 discloses matching video segments based on feature comparison.

US 5,918,223 analyses audio data to classify and rank similarity between audio files in a database.

WO01/88900 discloses a method of generating audio fingerprints that can be used to identify audio with the help of a database.

EP-A 0 955 592 discloses a method of querying a database to retrieve metadata using feature comparison

It is an object of the invention to provide a method according to the preamble, in which the average time to obtain the metadata is reduced.

This object is achieved according to the invention in a method which is characterized by computing a transmission fingerprint for a portion of a further multimedia object transmitted on a transmission channel, matching the transmission fingerprint with the fingerprints stored in the primary database, adding an entry comprising at least a fingerprint for the further multimedia object in a secondary database upon a successful match, and obtaining the metadata by matching the fingerprint against entries stored in the secondary database and only matching against the primary database if said matching against the secondary database fails.

When filled in this way, the secondary database contains a small number of entries, all for objects transmitted over the monitored channel(s). Matching against the secondary database will thus be faster than matching against the primary database. Only when no match is found in the secondary database is a match in the primary database performed Because it is expected that many requests will arrive for multimedia objects transmitted over the monitored transmission channel(s), it follows that many requests can be answered using only the smaller and faster secondary database. So, on the average, the time needed to match a fingerprint is reduced.

In an embodiment the method further comprises receiving at least a portion of the multimedia object and computing the fingerprint over the received portion. In many cases, the method according to the invention will be initiated by a remote third party wishing to identify a multimedia object which he hears. Because the method obtains metadata by matching a fingerprint for the multimedia object in a database, it is necessary to obtain a fingerprint for the object somehow.

In this embodiment, the user supplies a portion of the multimedia object, so that the fingerprint can be computed over that portion. For example, the user could record several seconds of audio and transmit that, or transmit several seconds of audio over a telephone connection. An alternative would be that the user computes the fingerprint itself first and then transmits the fingerprint to the server in which the matching is performed, but this alternative requires a more complex client

In a further embodiment the entry for the further multimedia object comprises the transmission fingerprint. During transmission, a multimedia object will always be modified somewhat. This means that a transmission fingerprint will also be slightly different from the fingerprints in the primary database, although not different enough to prevent matching. However, the object fingerprint will most likely be computed over a low-quality portion of the multimedia object, e.g. recorded through a mobile phone connection after being received in the mobile phone through the air from a radio transmission with bad reception quality. It is evident that this will introduce many additional errors in the recording, and thus will result in a more differing obj ect fingerprint. This increases the risk that the object fingerprint might be too different from the fingerprints in the primary database for a successful match, because of errors inherent in radio transmission and errors from the low-quality recording.

In this embodiment, the object fingerprint is matched against the transmission fingerprints, rather than against the fingerprints residing in the primary database. This eliminates at least some of the unsuccessful matches, because the object fingerprint differs less from the fingerprints in the secondary database than from the fingerprints in the primary database.

In a further embodiment the entry for the further multimedia object comprises a fingerprint for an entry in the primary database matching the transmission fingerprint. This embodiment has the advantage that the transmission fingerprint now does not need to be computed over the whole further multimedia object. After a match is found, the entry in the primary database is at least partially copied to the secondary database, so that object fingerprints can be matched against it.

In a further embodiment a transmission fingerprint is computed for plural further multimedia objects transmitted on respective transmission channels. By monitoring multiple channels, the chance that one is monitored to which a user is also listening is increased. After adding a corresponding entry to the secondary database, a request for metadata by that user can then be answered more quickly.

In a further embodiment the method further comprises recording at least a portion of the obtained metadata and an identifier for the transmission channel in a transmission monitoring logfile. By querying the secondary database for all entries associated with a particular transmission channel, a list of transmissions on that channel can be obtained. This list can be used by a copyright clearinghouse to determine how many royalties should go to particular copyright holders.

Such royalties are often based on an estimate of the number of times a particular song is broadcast, and this list provides an accurate estimate by an impartial third party. A radio station could under- or overestimate the number of times it broadcasts a particular song, or could be unwilling to supply sufficient details. Of course this list can also be valuable for many other purposes.

In a further embodiment the method further comprises removing a previous entry associated with a particular transmission channel from the secondary database upon adding the entry for the further multimedia object, associated with that particular transmission channel to the secondary database. This way, the secondary database is filled only with entries for multimedia objects presently being transmitted over at least one transmission channel. This way the secondary database is kept as small as possible.

It is a further object to provide a system according to the preamble, in which the average time to obtain the metadata is reduced.

This object is achieved according to the invention in a system characterized by transmission monitoring means for recording a portion of a further multimedia object transmitted on a transmission channel and fingerprinting means for computing a transmission fingerprint for the portion, the matching means being arranged for matching the transmission fingerprint with the fingerprints stored in the primary database, adding an entry comprising at least a fingerprint for the further multimedia object in a secondary database upon a successful match, and obtaining the metadata by matching the fingerprint against entries stored in the secondary database and only matching against the primary database if said matching against the secondary database fails.

In an embodiment the system further comprises receiving means for receiving at least a portion of the multimedia object, the fingerprinting means being arranged for computing the object fingerprint over the received portion.

The invention further relates to a computer program product arranged for causing a processor to execute the method of the invention.

These and other aspects of the invention will be apparent from and elucidated with reference to the embodiments shown in the drawing, in which:
Fig. 1 schematically shows a system arranged for identifying multimedia objects;
Fig. 2 schematically shows the server and the database as used in this system in more detail.
Fig. 3 schematically shows another embodiment of the server.

Throughout the figures, same reference numerals indicate similar or corresponding features. Some of the features indicated in the drawings are typically implemented in software, and as such represent software entities, such as software modules or objects.

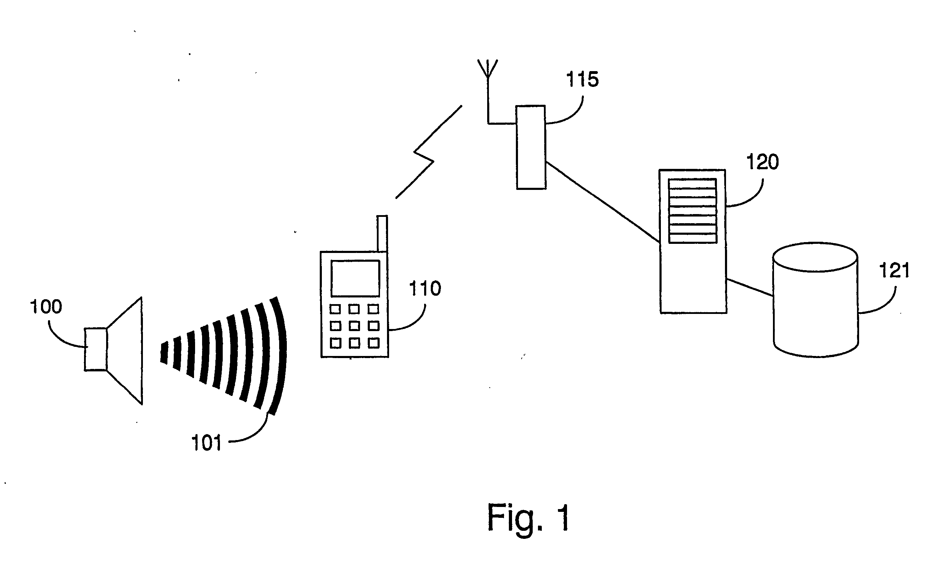

Fig. 1 schematically shows a system arranged for identifying multimedia objects. The system comprises a source 100, a mobile phone 110, a telephone network 115, a server 120 and a database 121. The source 100 renders a multimedia object 101. Preferably the multimedia object 101 comprises an audio signal, although it could equally well be a video signal. The term multimedia obj ect as used here refers to things like music, songs, movies, television programs, pictures and the likes.

In the embodiment of Fig. 1, the source 100 is a loudspeaker, although it can of course be any kind of signal source. For instance, the source 100 can be an audio installation like a radio, or a source of video signals. The source 100 usually obtains the multimedia object 101 it renders from another source. For example a radio would pick up a broadcast transmission from the air or from a cable connection and generate/render audible signals from that.

A user hears the multimedia object 101 and wants to know more about it, i.e. he wants to obtain metadata for the multimedia object 101. The term "metadata" refers to information such as the title, artist, genre and so on for a multimedia object. In many situations, this metadata is not supplied together with the multimedia object 101. For instance, the multimedia object 101 could be background music in a pub or shopping mall, or be part of a broadcast transmission on a radio station. In the case of radio, it is often difficult to properly hear the metadata as supplied by the DJ or radio presenter, if this metadata is given out at all.

In order to obtain this metadata, the user therefore takes his mobile phone 110 and calls a special phone number that connects him to a server 120. Usually this involves an intermediary such as a telephone network 115. When connected to the server 120, the user aims his mobile phone 110 so that it picks up the audio signal 101. The signal 101 is then transmitted over the phone connection to the server 120.

The server 120 then generates a fingerprint for the received signal 101. There are several techniques that can be used to compute such a multimedia fingerprint. International patent WO 02/065782 (attorney docket PHNL010110) describes a method that generates multimedia fingerprints for multimedia objects such as, for example, audio clips. The audio clip is divided in successive (preferably overlapping) time intervals. For each time interval, the frequency spectrum is divided in bands. A robust property of each band (e.g. energy) is computed and represented by a respective fingerprint bit.

A multimedia object is thus represented by a fingerprint comprising a concatenation of binary values, one for each time interval. To identify the multimedia object, a fingerprint is computed when a portion of a certain length, typically about three seconds, has been received. This smaller fingerprint is then matched (e.g. using a sliding window technique) against the fingerprint for the complete multimedia object. Note that one multimedia object may have plural associated fingerprints.

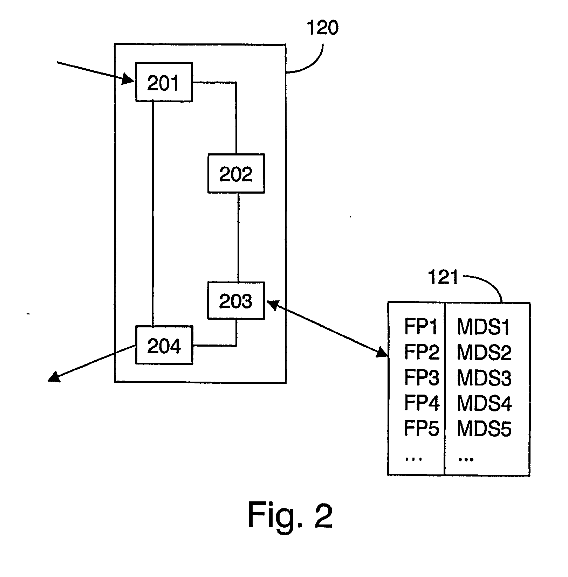

Using the computed fingerprint, the server 120 then performs a database lookup in database 121, which contains a number of previously computed fingerprints and associated sets of metadata, to obtain the metadata associated with the fingerprint. The operations by the server 120 to do so are explained with reference to Fig. 2 below.

The server 120 then sends a message,-such as an SMS .message, with the metadata to the user's mobile phone 110. The metadata can also be e-mailed to an e-mail address for the user, or be sent as a message to the user via an instant messaging service. This way, more extensive information can be supplied than can be handled by the potentially limited capabilities of the mobile phone 110. The mobile phone 110 could then, for example, receive an SMS message indicating the title and artist, and a statement that more information was sent to the user's e-mail address.

Of course the mobile phone 110 can easily be replaced by other devices that allow the transmission of audio and/or video data to the server 120. For instance, a microphone connected to a personal computer could be used. The computer then records sound from the microphone, and transmits the recording to the server 120 e.g. via the Internet as an e-mail message or using FTP, HTTP file upload or a similar mechanism. A portable device with recording means could also be used to make such a recording. The portable device can then be connected to the server via a phone line or network connection. Other transmission channels, such as Internet radio, allow the direct recording and transmission of a portion of a multimedia object, since the object is then transmitted in a digital format.

Fig. 2 schematically shows the server 120 and the database 121 in more detail. The server 120 here comprises an input module 201, a fingerprinting module 202, a Database Management System (DBMS) backend module 203, and a response module 204.

The input module 201 is activated when the user contacts the server 120 in order to obtain metadata for a particular multimedia object. It is preferably connected to the telephone network 115, so that users can contact the server 120 by simply calling a certain number on their mobile phone 110.

The input module 201 receives an audio clip through the connection established with the mobile phone 110 and feeds the audio clip to the fingerprinting module 202. The fingerprinting module 202 computes a fingerprint from the received audio clip. As mentioned above, one method for computing a multimedia fingerprint is described in international patent application WO 02/065782 (attorney docket PHNL010110), although of course any method for computing a multimedia fingerprint can be used. The fingerprinting module 202 then supplies the computed fingerprint to the DBMS backend module 203.

The DBMS backend module 203 performs a query on the database 121 to retrieve a set of metadata associated with the computed fingerprint from the database 121. As shown in Fig. 2, the database 121 comprises fingerprints FP1, FP2, FP3, FP4 and FP5 and respective associated sets of metadata MDS1, MDS2, MDS3, MDS4 and MDS5. The above-mentioned international patent application WO 02/065782 (attorney docket PHNL010110) describes various strategies for searching fingerprints computed for an audio clip with in a database with fingerprints for complete multimedia objects. One disclosed method of searching a fingerprint in a database uses reliability information of the extracted fingerprint bits. The fingerprint bits are determined by computing features of an information signal and thresholding said features to obtain the fingerprint bits. If a feature has a value very close to the threshold, a small change in the signal may lead to a fingerprint bit with opposite value. The absolute value of the difference between feature value and threshold is used to mark each fingerprint bit as reliable or unreliable. The reliabilities are subsequently used to improve the actual searching procedure.

The database 121 can be organized in various ways to optimize query time and/or data organization. The output of the fingerprinting module 202 should be taken into account when designing the tables in the database 121. In the embodiment shown in Fig. 2, the database 121 comprises a single table with entries (records) comprising respective fingerprints and sets of metadata.

Another way to realize the database 121 is to set up several tables. A first table comprises a plurality of unique identifiers (primary keys) each associated with respective sets of metadata. Such tables can be obtained from various music identification sources. The combination of artist, title and year of release could be combined to form a unique identifier, although this is not guaranteed to be unique, so preferably a really globally unique value is used.

A second table is then set up with entries comprising for each multimedia object its fingerprint and its unique identifier from the first table. If multiple fingerprints are possible for one multimedia object, all these fingerprints are stored in the second table, all associated with the one unique identifier for that multimedia object.

The DBMS backend module 203 then matches the fingerprint computed by the fingerprinting module 202 against the fingerprints in the second table, obtains an identifier and matches the identifier against the first table to obtain the metadata. If the database 211 is an SQL database, the two tables could be "joined" (in SQL terms) on the identifier.

The DBMS backend module 203 feeds the results of the query to the response module 204, which transmits the results to the user, e.g. as an SMS message or e-mail message. If the audio fragment received by the input module 201 was sent by a mobile phone, then the telephone number can be obtained through Caller ID or Automatic Number Identification or similar means. The input module 201 then supplies the calling number to the response module 204, so that an SMS message can be sent to that same number.

Alternatively, the input module 201 could receive another means of identifying the user, such as a usemame or e-mail address supplied by the user when contacting the server 120. Registration could be required for using the service, and then the destination address can be obtained by checking the user's registration details e.g. on the basis of the username supplied by the user.

An important aspect of maintenance of the database 121 is how to collect a sufficient number of fingerprints and associated sets of metadata so as to be able to correctly identify an acceptable number of multimedia objects.

It is of course possible to purchase a large number of record carriers like CDs compute fingerprints directly from the CD. This is an expensive and laborious operation, as computing the fingerprints and adding the metadata to the database 121 is difficult to automate. Further, one might not always be interested in CD quality, but also in degraded quality if that is more appropriate to the application. This would imply an additional preprocessing step before fingerprints can be put in the database 121. Also, one must obtain the metadata for all the songs for which fingerprints are stored in the database 121. This is an even greater challenge than obtaining the fingerprints themselves.

International patent application number WO 03/042867 (attorney docket PHNL010844) describes a method of maintaining a database with fingerprints and associated sets of metadata. Multimedia objects and an associated set of metadata are obtained from clients in a file sharing network. A fingerprint for the multimedia object is computed and added to the database together with the set of metadata. This way, plural sets of metadata can be collected for one multimedia object Using techniques like majority voting, decision tree pruning or cross validation, a definite set of metadata can be computed.

This way, it is no longer necessary to actively go out and buy content e.g. on CD, or to find out the metadata for content. By exploiting the objects and the metadata available from the file sharing clients on the network, signatures and metadata can be collected in a very efficient way. These clients already make the objects available together with metadata for anyone to download, so buying these objects becomes unnecessary. By collecting multiple sets of metadata and applying a filter or voting technique, an accurate set of metadata can be constructed from various potentially unreliable sets.

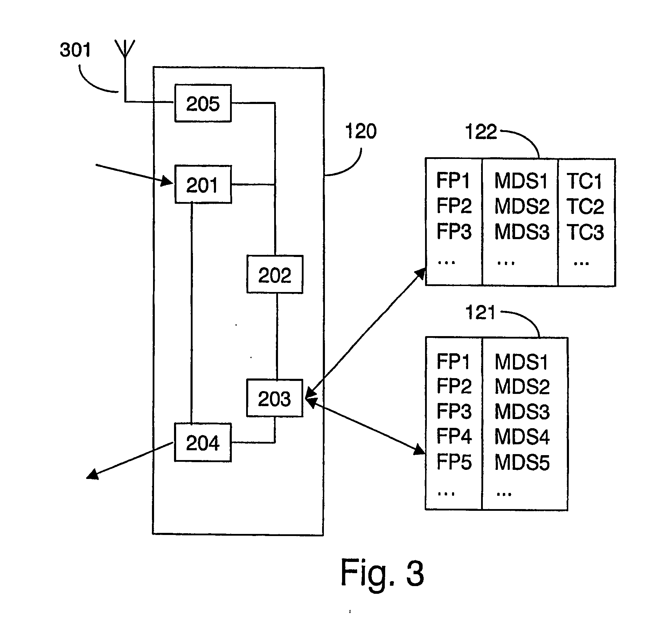

Fig. 3 schematically shows another embodiment of the server 120. Next to the database 121, hereafter called the primary database 121, there now is also a secondary database 122, also under the control of DBMS module 203. The organization of the secondary database 122 is preferably the same as the primary database 121. The secondary database 122 may be stored on another storage medium than the primary database 121, although this is not strictly necessary.

The server 120 is in this embodiment equipped with a transmission monitoring module 205, connected to a receiver 301 arranged for receiving a transmission from a medium such as such as an audio broadcast channel (e.g. radio), a video broadcast channel, a streaming Internet transmission channel, or a multicast Internet transmission channel. Using the receiver 301, the transmission monitoring module 205 records at least a part of a multimedia object being transmitted over a transmission medium. The module 205 could e.g. tune to a particular radio or TV station, or connect to a particular Internet host providing streaming audio.

The recorded portion is then fed to the fingerprinting module 202 so that a transmission fingerprint is computed for the recorded portion. The transmission fingerprint is then matched against the entries in the primary database 121. If a match is found, an entry in a secondary database 122 is created for the identified transmission. There are several ways to realize this.

One way to create an entry in the secondary database 122 is to duplicate at least part of the matching entry in the secondary database 122. For example, the fingerprint and unique identifier of a matching entry in the second table of the primary database 121 can, as mentioned above, be duplicated in the secondary database 122, allowing metadata to be obtained from the first table when necessary. This keeps the secondary database 122 as small as possible, but has the disadvantage that subsequent fingerprints are still matched against the original fingerprints.

Another embodiment is possible if the transmission fingerprint represents the transmission substantially as a whole. The transmission fingerprint is then included in the entry to be added to the secondary database 122. Of course this implies that the transmission monitoring module 205 must record (almost) the entire transmission and feed it to the fingerprinting module 202. The object fingerprint is then matched in the secondary database 122 against the transmission fingerprint.

Preferably, a previous entry associated with a particular transmission channel is removed from the secondary database 122 upon adding an entry associated with that particular transmission channel in the secondary database 122. This way, the secondary database 122 is filled only with entries for multimedia objects presently being transmitted over at least one transmission channel. This can be realized by also storing in the secondary database an identifier for the transmission channel with which the entries are associated and removing an entry having the same identifier as the entry that is about to be duplicated.

In the embodiment of Fig. 3, three transmission channels are monitored, and the matching entries for FP1, FP2 and FP3 have been duplicated into the secondary database 122. Additionally, transmission channel identifiers TC1, TC2 and TC3 have been added to the entries in the secondary database 122 for the transmission channels in question.

By collecting entries into the secondary database 122 in this fashion, an overview is created and maintained of the multimedia objects that are being transmitted over the transmission channel(s) monitored by the transmission monitoring module 205. If additionally an identifier for the transmission channel(s), and optionally a timestamp on which the entry was duplicated, is stored together with the entries, it becomes possible to create a transmission logbook (logfile) for each monitored channel.

By querying the secondary database 122 for all entries with a particular transmission channel, a list of transmissions on that channel can be obtained. This list can be used by a copyright clearinghouse such as the American Society of Composers, Authors and Publishers (ASCAP) or the Dutch BUMA/Stemra to determine how many royalties should go to particular copyright holders. Such royalties are often based on an estimate of the number of times a particular song or movie is broadcast, and this list provides an accurate estimate by an impartial third party. A radio or TV station could under- or overestimate the number of times it broadcast a particular song, or could be unwilling to supply sufficient details.

Of course this list can also be valuable for many other purposes. If the multimedia objects monitored comprise advertisements or promotional messages, then the list can be used to prove (or disprove) that a particular advertisement or message was broadcast at a certain time. This way a station can show that it met its contractual obligations to an advertiser.

The matching procedure for multimedia objects received by input module 201 is now slightly modified. The fingerprint is still computed as above, but this fingerprint is matched by DBMS module 203 against the entries stored in the secondary database 122 before matching against the primary database 121.

Of course, if a match is found in the secondary database 122, it will no longer be necessary to match against the primary database 121 at all, as the secondary database 122 only contains entries duplicated from the primary database 121. However, if no match were found in the secondary database 122, the (larger) primary database 121 might still contain a matching entry.

The server 120 is preferably equipped with a high-quality receiver 301, so that the recorded transmissions are also of high quality. This makes matching the transmission fingerprints against the primary database 121 more reliable. During transmission over a transmission medium like radio, a multimedia object will always be modified somewhat. This means that the transmission fingerprint will be slightly different from the fingerprints in the primary database 121, although not different enough to prevent matching.

The object fingerprint on the other hand will most likely be computed based on a recording of low to very low quality. As explained above, the mobile phone 110 could be used to transmit a recording of a multimedia object to the server 120. Because of the very low quality of mobile phone transmissions, this will introduce many additional errors in the recording, and thus the object fingerprint will have a large degree of difference with the fingerprints in the primary database 121. This decreases the chances of a successful match against the entries in the primary database 121.

If the transmission fingerprint is included in the entry added to the secondary database, as explained above, then the object fingerprint is matched against the transmission fingerprints, rather than against the fingerprints residing in the primary database 121. This eliminates at least some of the unsuccessful matches, because the object fingerprint differs less from the fingerprints in the secondary database than from the fingerprints in the primary database.

A fingerprint computed over a low quality recording is likely to contain many errors, reducing the chances of a successful and correct match in a large database such as the primary database 121. However, if a small database like secondary database 122 is used to match the fingerprint, a lower reliability in the matching can be tolerated. The entries in the secondary database 122 are not likely to be similar, so even when there are a large number of unreliable bits in the fingerprint, there will most likely be at most one entry that is a suitable match.

The DBMS backend module 203 feeds the results of the query to the response module 204, which handles it as set out above with reference to Fig. 2.

It should be noted that the above-mentioned embodiments illustrate rather than limit the invention, and that those skilled in the art will be able to design many alternative embodiments without departing from the scope of the appended claims.

For instance, the fingerprint for the multimedia object 101 can alternatively be computed by a fingerprinting module in the mobile phone 110, rather than by the fingerprinting module 202 in the server 120. This way, only the fingerprint itself has to be transmitted to the server 120, and the fingerprinting module 202 can be omitted from the server 120. As the fingerprint is usually smaller than the portion of the multimedia object 101 from which it was computed, this achieves a substantial bandwidth reduction. The construction and operation of a mobile phone equipped with a fingerprinting module is explained in international patent application WO 02/17135 (attorney docket PHNL000469).

The database 121 could be distributed over multiple physical computers systems, to reduce the workload of each individual system. The contents of the database 121 could also be distributed over a plurality of clients in a file sharing network, as is explained in international patent application WO 03/046760 (attorney docket PHNL010874).

The contents of the database 121 can be made available for free, or only to paying subscribers. Alternatively, a fee could be charged for every query performed on the database 121. The amount of metadata returned to the client in response to submitting a fingerprint could also be varied: the free service returns only artist and title, and the subscription-based service returns all the metadata available in the database, for example.

The secondary database 122 can in practice be realized as one or more tables in the primary database 121, although this may make access times to the database slower as the size of the database (preferably held in working memory) now increases.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements.

The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A computer-implemented method of obtaining metadata for a multimedia object in response to a request received from a client (110) over a network (115) by matching an object fingerprint for the multimedia object against entries stored in a primary database (121) comprising fingerprints and respective associated sets of metadata, **characterized by** computing a transmission fingerprint for a portion of a further multimedia object transmitted on a monitored transmission channel, matching the transmission fingerprint with the fingerprints stored in the primary database (121), adding an entry comprising at least a fingerprint for the further multimedia object in a secondary database (122) upon a successful match, and obtaining the metadata by matching the object fingerprint against entries stored in the secondary database (122) and only matching against the primary database (121) if said matching against the secondary database (122) fails.

2. The method of claim 1, further comprising receiving at least a portion of the multimedia object and computing the object fingerprint over the received portion.

3. The method of claim 1, in which the entry for the further multimedia object comprises the transmission fingerprint.

4. The method of claim 1, in which the entry for the further multimedia object comprises a fingerprint for an entry in the primary database (121) matching the transmission fingerprint.

5. The method of claim 1, in which a transmission fingerprint is computed for plural further multimedia objects transmitted on respective transmission channels.

6. The method of claim 1, further comprising recording at least a portion of the obtained metadata and an identifier for the transmission channel in a transmission monitoring logfile.

7. The method of claim 1, further comprising removing a previous entry associated with a particular transmission channel from the secondary database (122) upon adding the entry for the further multimedia object, associated with that particular transmission channel to the secondary database (122).

8. A computer system (120) arranged for obtaining metadata for a multimedia object
comprising receiving means (201) for receiving a request from a client (110) over a network (115) matching means (203) for matching an object fingerprint for the multimedia object against entries stored in a primary database (121) comprising fingerprints and respective associated sets of metadata, **characterized by** transmission monitoring means (205) for recording a portion of a further multimedia object transmitted on a monitored transmission channel and fingerprinting means (202) for computing a transmission fingerprint for the portion, the matching means being arranged for matching the transmission fingerprint with the fingerprints stored in the primary database (121), adding an entry comprising at least a fingerprint for the further multimedia object in a secondary database (122) upon a successful match, and obtaining the metadata by matching the object fingerprint against entries stored in the secondary database (122) and only matching against the primary database (121) if said matching against the secondary database fails.

9. The system of claim 8, the receiving means (201) being configured for receiving at least a portion of the multimedia object, the fingerprinting means (202) being arranged for computing the object fingerprint over the received portion.

10. A computer program product arranged for causing a processor to execute the method of claim 1.

## Patentansprüche

1. Computer-implementiertes Verfahren zum Erhalten von Metadaten für ein Multimediaobjekt in Reaktion auf einen Antrag, empfangen von einem Kunden (110) über ein Netzwerk (115) durch Zusammenpassung eines Objekt-Fingerabdrucks für das Multimediaobjekt mit Eingaben, die in einer primären Datei (121) gespeichert sind, die Fingerabdrucke und betreffende assoziierte Sätze mit Multimedien enthält, **gekennzeichnet durch** Berechnung eines Übertragungsfingerabdrucks für einen Teil eines weiteren Multimediaobjektes, das über einen überwachten Übertragungskanal übertragen worden ist, **durch** Zusammenpassung des Übertragungsfingerabdrucks mit den Fingerabdrücken, die in der primären Datei (121) gespeichert sind, Hinzufügung einer Eingabe mit wenigstens einem Fingerabdruck für das weitere Multimediaobjekt in einer sekundären Datei (122) bei einer erfolgreichen Zusammenpassung und Erhaltung der Metadaten **durch** Zusammenpassung des Objektfingerabdrucks mit Eingaben, die in der sekundären Datei (122) gespeichert sind und nur mit der primären Datei (121) zusammenpassen, wenn die genannte Zusammenpassung mit der sekundären Datei (122) missglückt.

2. Verfahren nach Anspruch 1, das weiterhin das Empfangen wenigstens eines Teils des Multimediaobjektes und das Berechnen des Objektfingerabdrucks über den empfangenen Teil umfasst.

3. Verfahren nach Anspruch 1, wobei die Eingabe für das weitere Multimediaobjekt den Übertragungsfingerabdruck enthält.

4. Verfahren nach Anspruch 1, wobei die Eingabe für das weiter Multimediaobjekt einen Fingerabdruck für eine Eingabe in die primäre Datei (121) enthält, die mit dem Übertragungsfingerabdruck übereinstimmt.

5. Verfahren nach Anspruch 1, wobei ein Übertragungsfingerabdruck für mehrere weitere Multimediaobjekte berechnet wird, die über betreffende Übertragungskanäle übertragen werden.

6. Verfahren nach Anspruch 1, das weiterhin die nachfolgenden Verfahrensschritte umfasst: das Aufzeichnen wenigstens eines Teils der erhaltenen Metadaten und eines Identifizierers für den Übertragungskanal in einer die Übertragung überwachenden Protokolldatei.

7. Verfahren nach Anspruch 1, weiterhin umfassend: das Entfernen einer vorhergehenden Eingabe, die mit einem bestimmten Übertragungskanal assoziiert ist, aus der sekundären Datei (122) bei Hinzufügung der Eingabe für das weitere Multimediaobjekt, assoziiert mit diesem bestimmten Übertragungskanal zu der sekundären Datei (122).

8. Computersystem (120) vorgesehen zum Erhalten von Metadaten für ein Multimediaobjekt, das die nachfolgenden Elemente umfasst:
- Empfangsmittel (201) zum Empfangen eines Antrags von einem Kunden (110) über ein Netzwerk (115)Zusammenpassungsmittel (203) zur Zusammenpassung eines Objekt-Fingerabdrucks für das Multimediaobjekt mit Eingaben, die in einer primären Datei (121) gespeichert sind, die Fingerabdrucke und betreffende assoziierte Sätze mit Multimedien enthält, **gekennzeichnet durch** Überwachungsmittel (205) zur Aufzeichnung eines Teils eines weiteren Multimediaobjektes, das über einen überwachten Übertragungskanal übertragen worden ist, und Fingerabdruckmittel (202) zum Berechnen eines Übertragungsfingerabdrucks für den Teil, wobei die Zusammenpassungsmittel vorgesehen sind zum Zusammenpassen des Übertragungsfingerabdrucks mit den Fingerabdrücken, die in der primären Datei (121) gespeichert sind, zum Hinzufügen einer Eingabe mit wenigstens einem Fingerabdruck für das weitere Multimediaobjekt in einer sekundären Datei (122) bei einer erfolgreichen Zusammenpassung, und zum Erhalten der Metadaten **durch** Zusammenpassung des Objektfingerabdrucks mit Eingaben, die in der sekundären Datei (122) gespeichert sind und nur mit der primären Datei (121) zusammenpassen, wenn die genannte Zusammenpassung mit der sekundären Datei missglückt.

9. System nach Anspruch 8, wobei die Empfangsmittel (201) vorgesehen sind zum Empfangen wenigstens eines Teils des Multimediaobjekts, wobei die Fingerabdruckmittel (202) dazu vorgesehen sind, den Objektfingerabdruck über den empfangen Teil zu berechnen.

10. Computerprogrammprodukt, vorgesehen, damit ein Prozessor das Verfahren nach Anspruch 1 durchführt.

## Revendications

1. Procédé informatisé d'obtention de métadonnées pour un objet multimédia en réponse à une demande reçue d'un client (110) sur un réseau (115) en recherchant une concordance entre une empreinte d'objet pour l'objet multimédia et des entrées enregistrées dans une base de données primaire (121) comprenant des empreintes et des séries associées respectives de métadonnées, **caractérisé par** le calcul d'une empreinte de transmission pour une partie d'un objet multimédia complet transmis sur un canal de transmission contrôlé, la recherche de concordance entre l'empreinte de transmission et les empreintes enregistrées dans la base de données primaire (121), l'addition d'une entrée comprenant au moins une empreinte pour l'objet multimédia complet dans une base de données secondaire (122) en cas de concordance réussie et l'obtention des métadonnées en recherchant une concordance entre l'empreinte de l'objet et les entrées enregistrées dans la base de données secondaire (122) et en recherchant une concordance uniquement dans la base de données primaire (121) si ladite recherche de concordance dans la base de données secondaire (122) échoue.

2. Procédé selon la revendication 1 comprenant par ailleurs la réception d'au moins une partie de l'objet multimédia et le calcul de l'empreinte de l'objet sur la partie reçue.

3. Procédé selon la revendication 1, dans lequel l'entrée pour l'objet multimédia complet comprend l'empreinte de transmission.

4. Procédé selon la revendication 1, dans lequel l'entrée pour l'objet multimédia complet comprend une empreinte pour une entrée dans la base de données primaire (121) correspondant à l'empreinte de transmission.

5. Procédé selon la revendication 1, dans lequel une empreinte de transmission est calculée pour plusieurs objets multimédia supplémentaires transmis sur des canaux de transmission respectifs.

6. Procédé selon la revendication 1, comprenant par ailleurs l'enregistrement d'au moins une partie des métadonnées obtenues et un identificateur pour le canal de transmission dans un journal de contrôle des transmissions.

7. Procédé selon la revendication 1, comprenant par ailleurs l'élimination d'une étape précédente associée à un canal de transmission particulier à partir de la base de données secondaire (122) moyennant addition de l'entrée pour l'objet multimédia complet, associé avec ce canal de transmission particulier à la base de données secondaire (122).

8. Système informatique (120) destiné à obtenir des métadonnées pour un objet multimédia comprenant des moyens de réception (201) pour recevoir une demande émanant d'un client (110) sur un réseau (115), des moyens de recherche de concordance (203) pour la mise en concordance d'une empreinte d'objet pour l'objet multimédia avec des entrées enregistrées dans une base de données primaire (121) comprenant des empreintes et des séries associées respectives de métadonnées, **caractérisé par** des moyens de contrôle de la transmission (205) pour enregistrer une partie d'un autre objet multimédia transmis sur un canal de transmission contrôlé et des moyens de calcul d'empreinte (202) pour calculer une empreinte de transmission pour la partie, les moyens de recherche de concordance étant destinés à mettre en concordance l'empreinte de transmission avec les empreintes enregistrée dans la base de données primaire (121), l'addition d'une entrée comprenant au moins une empreinte pour l'autre objet multimédia dans une base de données secondaire (122) en cas de concordance réussie et l'obtention des métadonnées en recherchant une concordance entre l'empreinte de l'objet et les entrées enregistrées dans la base de données secondaire (122) et en recherchant une concordance uniquement dans la base de données primaire (121) si ladite recherche de concordance dans la base de données secondaire échoue.

9. Système selon la revendication 8, les moyens de réception (201) étant configurés pour recevoir au moins une partie de l'objet multimédia et les moyens de calcul d'empreinte (202) étant destinés à calculer l'empreinte de l'objet sur la partie reçue.

10. Programme informatique destiné à amener un processeur à exécuter le procédé de la revendication 1.
